Europäisches Patentamt

European Patent Office

Office européen des brevets

(19)

(11) Veröffentlichungsnummer : **0 077 876**
**B1**

(12)

# EUROPÄISCHE PATENTSCHRIFT

(45) Veröffentlichungstag der Patentschrift :
01.10.86

(21) Anmeldenummer : 82103871.8

(22) Anmeldetag : 05.05.82

(51) Int. Cl.⁴ : **G 11 B 23/04, G 11 B 25/06**

(54) **Mini-kassette.**

(30) Priorität : 27.10.81 DE 3142519

(43) Veröffentlichungstag der Anmeldung :
04.05.83 Patentblatt 83/18

(45) Bekanntmachung des Hinweises auf die Patenterteilung : 01.10.86 Patentblatt 86/40

(84) Benannte Vertragsstaaten :
AT BE CH DE FR GB IT LI NL

(56) Entgegenhaltungen :
DE-A- 2 057 510
DE-A- 2 938 729
DE-C- 862 060

(73) Patentinhaber : GRUNDIG E.M.V. Elektro-Mechanische Versuchsanstalt Max Grundig holländ. Stiftung &
Co. KG.
Kurgartenstrasse 37
D-8510 Fürth (DE)

(72) Erfinder : Mangold, Hans, Dipl.-Ing.
Bussardstrasse 18
D-8510 Fuerth/Bayern (DE)

EP 0 077 876 B1

Jouve, 18, rue St-Denis, 75001 Paris, France

## Beschreibung

Die Erfindung bezieht sich auf eine Magnetband-Kassette gemäß Oberbegriff des Anspruchs 1.

Die Größe eines Magnetband-Aufzeichnungs- und Wiedergabegeräts wird mit fortschreitender Miniaturisierung der Elektronik, insbesondere mit zunehmender Verwendung von IC's bzw. Mini-Bauteilen, weitgehend von der Größe der verwendeten Kassette bestimmt.

Da der Benutzer eines Magnetbandgeräts für den Heimgebrauch eine möglichst lange Spieldauer der Kassetten wünscht, ist für die Kassetten eine gewisse Mindestgröße vorgegeben.

Bei einem tragbaren Magnetbandgerät, das beispielsweise die Bildaufzeichnung mit Hilfe einer Videokamera ermöglichen soll, ist eine längere Aufnahmedauer nicht erforderlich. Gewicht und Abmessung eines tragbaren Magnetbandgeräts spielen jedoch eine große Rolle.

Aus den unterschiedlichen Anforderungen eines Benutzers an ein Video-Heimgerät einerseits und ein tragbares Video-Aufzeichnungsgerät andererseits ergibt sich zwangsläufig ein Zielkonflikt, der zu unterschiedlichen Kassetten für das Heimgerät und das tragbare Gerät bzw. zu relativ großen Kassetten für das tragbare Gerät geführt hat.

Es ist zwar bereits eine Konstruktion bekanntgeworden, bei der auch kleinere Kassetten in einem Video-Heimgerät für größere standardisierte Kassetten abgespielt werden können, die dafür erforderliche Konstruktion ist jedoch recht kompliziert und damit teuer. So werden gemäß diesem Stand der Technik Zahnradübersetzungen notwendig, mit deren Hilfe der Bandwickelabstand ausgeglichen wird.

Aus der DE-A1-29 38 729 ist ferner eine Kassetteneinheit bekannt, bei der die Bandspulen im Mittenabstand variabel zueinander in einem Magnetbandträger angeordnet sind, der in verschiedene Kassettengehäuse mit verschiedenen Abmessungen eingesetzt werden kann.

Der Erfindung liegt die Aufgabe zugrunde, eine relativ kleine Magnetband-Kassette zu schaffen, die ohne größeren technischen Aufwand auch in einem für größere standardisierte Kassetten vorgesehenen Video-Heimgerät abgespielt werden kann, also systemkompatibel ist.

Die Lösung dieser Aufgabe erfolgt erfindungsgemäß durch die im kennzeichnenden Teil des Anspruchs 1 angegebenen Maßnahmen. Vorteilhafte Weiterbildungen ergeben sich aus den Unteransprüchen.

Die Erfindung wird nachfolgend unter Bezugnahme auf die Zeichnungsfiguren beispielsweise erläutert. Es zeigen :

Figur 1 eine Mini-Kassette im Normalzustand,

Figur 2 eine Mini-Kassette im ausgezogenen Zustand und

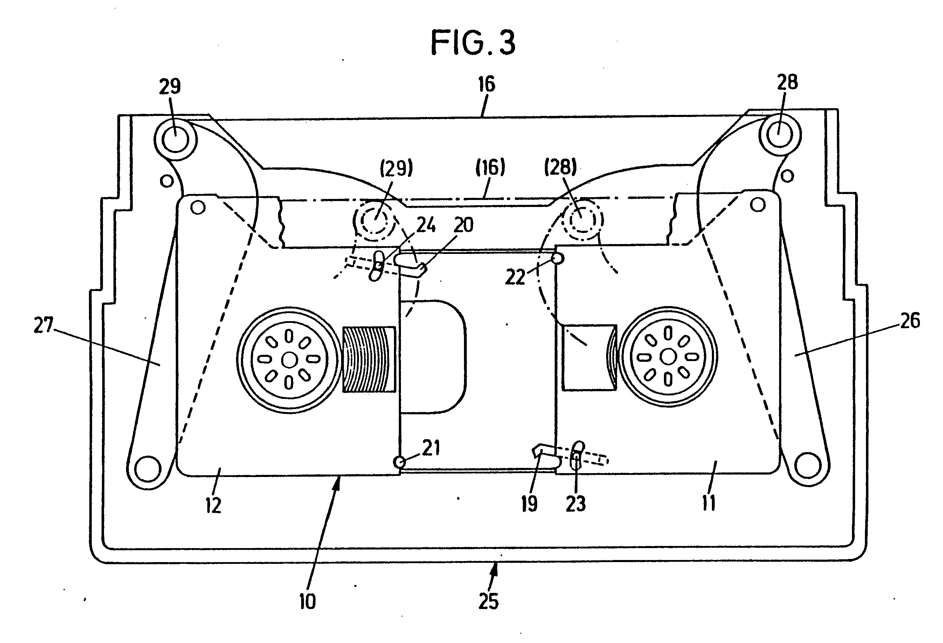

Figur 3 eine Mini-Kassette im ausgezogenen Zustand in einem Aufnahmebehälter mit den Außenmaßen einer größeren standardisierten Kassette.

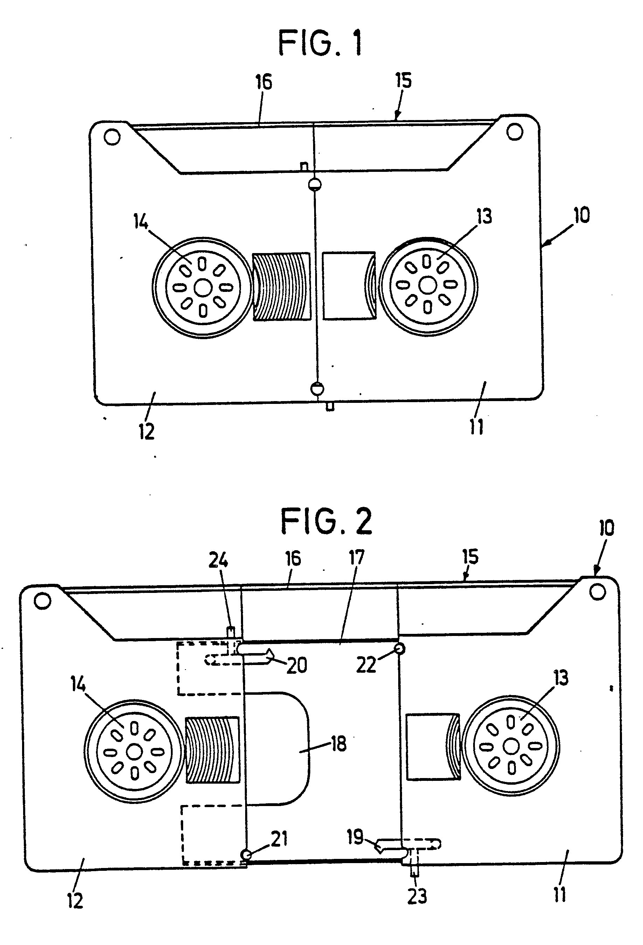

Die in Fig. 1 im Normalzustand dargestellte Mini-Kassette 10 hat im wesentlichen eine quaderförmige Gestalt. Sie besteht aus zwei Halbteilen 11 und 12, die grundsätzlich spiegelsymmetrisch zueinander sind. In jedem der Halbteile 11 und 12 ist jeweils eine Wickelspule 13 bzw. 14 angeordnet. An einer Schmalseite der Magnetband-Kassette 10 ist eine Öffnung 15 für den Durchtritt von Aufnahme-/Wiedergabe- bzw. Löschköpfen vorgesehen. Die Öffnung 15 kann teilweise auch auf eine großflächige Breitseite der Magnetband-Kassette 10 übergreifen. Durch entsprechende Führungen innerhalb der Magnetband-Kassette 10 wird erreicht, daß das Magnetband 16 im bereits erwähnten Ausschnitt 15 parallel zu einer Längskante der quaderförmigen Magnetband-Kassette 10 geführt wird.

In Fig. 2 ist die Magnetband-Kassette 10 im ausgezogenen Zustand dargestellt. Die Bandwickel sind auf den der Standardkassette entsprechenden Abstand auseinandergezogen. Dabei wird ein im wesentlichen hohlzylindrischer Führungsabschnitt 17 mit rechteckigem Querschnitt erkennbar, der mit dem Halbteil 11 verbunden ist und an der Innenwandung des anderen Halbteils 12 geführt wird. Die Länge des Führungsabschnitts 17 muß so gewählt werden, daß die Magnetband-Kassette 10 auch im ausgezogenen Zustand noch eine hinreichende Führungslänge zwischen dem Führungsabschnitt 17 und der Innenwandung des Halbteils 12 aufweist. Eine Ausnehmung 18 im hohlzylindrischen Führungsabschnitt 17 verhindert eine gegenseitige Beeinträchtigung des Führungsabschnittes 17 einerseits und der Lagerung der Wickelspule 14 andererseits. Zwei hakenförmige Hebel 19 bzw. 20 greifen im zusammengeschobenen Normalzustand der Magnetband-Kassette 10 hinter zugeordnete Vorsprünge 21 bzw. 22 und sorgen so für eine Verriegelung im zusammengeschobenen Zustand. Diese Hebel 19 bzw. 20 können durch stiftförmige Stößel 23 bzw. 24 wieder aus der Verriegelungsposition verschwenkt werden. Selbstverständlich könnten die dargestellten hakenförmigen Hebel 19, 20 auch in zugeordnete Ausnehmungen in der Innenwandung des jeweils anderen Halbteils 11 bzw. 12 eingreifen. Die Stößel 23 und 24 können auch senkrecht zur Schwenkebene der Hebel 19 bzw. 20 angeordnet werden. Die Hebel 19 und 20 werden dann nicht durch eine Stoßbewegung in Hauptrichtung der Stößel 23 bzw. 24 verschwenkt, sondern durch eine Schwenkbewegung der Stößel 23 bzw. 24.

Für den Fall, daß die Magnetband-Kassette 10 auch im ausgezogenen Zustand noch kleiner ist als die standardisierte Kassette des Video-Heimgeräts, in dem sie aufgenommen werden soll, kann ein Aufnahmebehälter 25 vorgesehen werden, dessen Außenmaße mit den standardisierten Maßen der größeren Normalkassette übereinstimmen. Innerhalb des Aufnahmebehälters 25 sind zwei Schwenkarme 26 bzw. 27 mit Bandführungselementen 28 bzw. 29 angeordnet. Die Bandführungselemente 28 bzw. 29 hintergreifen im Ruhezustand der Schwenkhebel 26 bzw. 27 das Magnetband 16 der Magnetband-Kassette 10. Durch die Schwenkbewegung der Hebel 26 und 27 wird das Magnetband 16 derart umgelenkt, daß es die gleiche Lage hat wie innerhalb einer größeren standardisierten Magnetband-Kassette mit den gleichen Außenmaßen wie der Aufnahmebehälter 25. Die aus dem Aufnahmebehälter 25 und der Magnetband-Kassette 10 gebildete neue Einheit ist damit mit den standardisierten größeren Kassetten voll austauschbar. Sie kann in dieser Form in ein Video-Heimgerät eingesetzt werden, ohne daß sich irgendwelche Probleme ergeben. Der Aufnahmebehälter 25 kann auch mit einem abnehmbaren Deckel versehen sein.

Der Gegenstand der Erfindung ermöglicht damit die volle Ausnutzung der Vorteile einer kleineren Kassette bei tragbaren Geräten und gleichzeitig die Verwendung einer solchen Kassette auch in den üblichen Video-Heimgeräten. Durch entsprechende Positionierung der Magnetband-Kassette 10 im Aufnahmebehälter 25 ist es sogar möglich, eine Viertel-Zoll-Band-Kassette in einem Video-Heimgerät für die Halb-Zoll-Band-Kassetten abzuspielen, sofern diese Video-Heimgeräte so ausgelegt sind, daß sie im Wende- bzw. Reverse-Betrieb arbeiten und bei jedem Durchlauf nur die halbe Breite des Magnetbandes beschreiben bzw. abtasten. Damit ist dann die Kompatibilität zwischen einem tragbaren Aufzeichnungsgerät mit Viertel-Zoll-Band einerseits und einem Wiedergabegerät mit Halb-Zoll-Band gegeben.

**Patentansprüche**

1. Magnetband-Kassette (10) in Form eines im wesentlichen quaderförmigen Körpers mit zwei darin angeordneten Wickelspulen (13, 14) für das Magnetband (16) und einer Öffnung (15) für die Aufnahme-/Wiedergabe- bzw. Löschköpfe, wobei der Mittenabstand der beiden Wickelspulen veränderbar ist, dadurch gekennzeichnet, daß die Kassette (10) mittig teilbar ist und beide Kassetten-Halbteile (11, 12) je eine Wickelspule enthalten und über ein Führungsteil (17) in der Kassetten-Haupterstreckungsrichtung verschiebbar verbunden sind, wobei durch Verschiebung der Halbteile (11, 12) der Achsabstand der Wickelspulen verändert wird.

2. Magnetband-Kassette nach Anspruch 1, dadurch gekennzeichnet, daß das Führungsteil (17) aus einem, einem Kassetten-Halbteil (11) zugeordneten und als Hohlzylinder mit rechteckigem Querschnitt ausgebildeten Teil besteht, das an den Innenwandungen des anderen Halbteils (12) der Kassette (10) gleitend geführt ist.

3. Magnetband-Kassette nach den Ansprüchen 1 und 2, dadurch gekennzeichnet, daß das als Hohlzylinder ausgebildete Führungsteil (17) im möglichen Überdeckungsbereich mit der Lagerung der Wickelspulen (13, 14) entsprechende Aussparungen (18) aufweist.

4. Magnetband-Kassette nach einem der Ansprüche 1 bis 3, dadurch gekennzeichnet, daß eine Vorrichtung (19 bis 22) zur Verriegelung der beiden Halbteile (11, 12) im zusammengeschobenen Zustand vorhanden ist.

5. Magnetband-Kassette nach Anspruch 4, dadurch gekennzeichnet, daß die Verriegelungsvorrichtung durch einen in eine Ausnehmung des anderen Halbteils (11, 12) eingreifenden oder einen hinter einen Vorsprung (21, 22) des anderen Halbteils (11, 12) greifenden hakenförmigen Hebel (19, 20) gebildet wird.

6. Magnetband-Kassette nach Anspruch 5, dadurch gekennzeichnet, daß der Hebel (19, 20) einen Betätigungsstift (23, 24) zur Entriegelung des Hebels aufweist.

7. Magnetband-Kassette nach einem der Ansprüche 1 bis 6, in Kombination mit einem Aufnahmebehälter dessen Außenmaße einer standardisierten Kassette eines bestimmten Magnetbandsystems entsprechen und dessen Innenmaße zur Aufnahme der Magnetband-Kassette (10) im ausgezogenen Zustand geeignet sind, dadurch gekennzeichnet, daß der Aufnahmebehälter (25) zwei symmetrisch zueinander angeordnete Schwenkarme (26, 27) mit Bandführungselementen (28, 29) aufweist, die in der Ausgangslage das Magnetband (16) der Magnetband-Kassette (10) hintergreifen und nach erfolgter Schwenkbewegung innerhalb des Aufnahmebehälters (25) derart führen, daß die so erzielte Bandführung innerhalb des Aufnahmebehälters (25) der Bandführung in einer standardisierten Kassette entspricht.

8. Magnetband-Kassette nach Anspruch 7, dadurch gekennzeichnet, daß der Aufnahmebehälter (25) die Außenmaße einer Halb-Zoll-Band-Kassette und die von ihm aufgenommene Magnetband-Kassette (10) im zusammengeschobenen Zustand die Außenmaße einer Viertel-Zoll-Band-Kassette aufweisen.

**Claims**

1. Magnetic tape cassette (10) in the form of an essentially cuboid body with two reels (13, 14) arranged therein for the magnetic tape (16) and an opening (15) for the recording/playback or erase heads, the centreto-centre distance between the two reels being variable, characterised in that the cassette (10) is separable in the middle and both cassette halves (11, 12) each contain a reel and are displaceably connected via a guide portion (17) in the main direction of extension of the cassette, the axial distance of the reels being variable by displacement of the halves (11, 12).

2. Magnetic tape cassette according to Claim 1, characterised in that the guide portion (17) consists of a part designed as a hollow cylinder of rectangular cross-section assigned to one cassette half (11) and guided by sliding against the inside walls of the other half (12) of the cassette (10).

3. Magnetic tape cassette according to Claims 1 and 2, characterised in that the guide portion (17) designed as a hollow cylinder has appropriate recesses (18) in the possible area of coincidence with the bearing of the reels (13, 14).

4. Magnetic tape cassette according to one of Claims 1 to 3, characterised in that a mechanism (19 to 22) for interlocking the two halves (11, 12) is provided in the pushed-together state.

5. Magnetic tape cassette according to Claim 4, characterised in that the interlocking mechanism is formed by a hook-shaped lever (19, 20) engaging in a recess of the other half (11, 12) or grasping behind a projection (21, 22) of the other half (11, 12).

6. Magnetic tape cassette according to Claim 5, characterised in that the lever (19, 20) has an actuating pin (23, 24) for release of the lever.

7. Magnetic tape cassette according to one of Claims 1 to 6, in combination with a receiving container, the outside dimensions of which correspond to a standardised cassette of a certain magnetic tape system and the inside dimensions of which are suitable for receiving the magnetic tape cassette (10) in the pulled-out state, characterised in that the receiving container (25) has two symmetrically arranged swivel arms (26, 27) with tape guidance elements (28, 29) which, in the initial position, grasp behind the magnetic tape (16) of the magnetic tape cassette (10) and, after performed swivel movement, guide within the receiving container (25) in such a way that the tape guidance thereby achieved within the receiving container (25) corresponds to the tape guidance in a standardised cassette.

8. Magnetic tape cassette according to Claim 7, characterised in that the receiving container (25) has the outside dimensions of a half-inch tape cassette and the magnetic tape cassette (10) received by it has, in the pushed-together state, the outside dimensions of a quarter-inch tape cassette.

**Revendications**

1. Cassette à bande magnétique (10) réalisée sous la forme d'un corps essentiellement parallélépipédique comportant deux bobines d'enroulement (13, 14) disposées à l'intérieur de ce corps et prévues pour la bande magnétique (16) et une ouverture (15) servant à recevoir les têtes d'enregistrement/de lecture ou d'effacement, la distance entre les centres des deux bobines d'enroulement étant modifiable, caractérisée en ce que la cassette (10) peut être divisée dans sa partie médiane, et en ce que les deux moitiés de cassette (11, 12) contiennent chacune une bobine d'enroulement et sont reliées par l'intermédiaire d'un organe de guidage (17) de manière à être déplaçables suivant la direction d'étendue principale de la cassette, la distance entre les axes des bobines étant modifiée par le coulissement des moitiés (11, 12).

2. Cassette à bande magnétique selon la revendication 1, caractérisée en ce que l'organe de guidage (17) est constitué par une partie associée à une moitié de cassette (11) et réalisée sous la forme d'un cylindre creux possédant une section transversale rectangulaire et qui est guidé, avec possibilité de glissement, contre les parois intérieures de l'autre moitié (12) de la cassette (10).

3. Cassette à bande magnétique selon les revendications 1 et 2, caractérisée en ce que l'organe de guidage (17) réalisé en forme de cylindre creux comporte, dans la zone possible de recouvrement avec le support des bobines (13, 14), des évidements correspondants (18).

4. Cassette à bande magnétique selon l'une des revendications 1 à 3, caractérisée par le fait qu'il est prévu un dispositif (19 à 22) servant à verrouiller les deux moitiés (11, 12), dans leur état replié l'une contre l'autre.

5. Cassette à bande magnétique selon la revendication 4, caractérisée par le fait que le dispositif de verrouillage est formé par un levier (19, 20) en forme de crochet qui s'engage dans un évidement de l'autre moitié (11, 12) ou qui s'applique contre une partie saillante (21, 22) de l'autre moitié (11, 12).

6. Cassette à bande magnétique selon la revendication 5, caractérisée en ce que le levier (19, 20) comporte une tige de manœuvre (23, 24) servant à déverrouiller ledit levier.

7. Cassette à bande magnétique selon l'une des revendications 1 à 6, en combinaison avec un logement récepteur dont les dimensions extérieures correspondent à une cassette normalisée d'un système déterminé à bande magnétique et dont les dimensions intérieures conviennent pour recevoir la cassette à bande magnétique (10), à l'état déployé, caractérisée en ce que le logement récepteur (25) comporte deux bras pivotants (26, 27) disposés symétriquement l'un par rapport à l'autre et comportant des organes (28, 29) de guidage de la bande qui, dans la position initiale s'engagent derrière la bande magnétique (16) de la cassette à bande magnétique (10) et, après un mouvement de pivotement, guident la bande à l'intérieur du logement récepteur (25) de telle sorte que le guidage ainsi obtenu de la bande à l'intérieur du logement récepteur (25) correspond au guidage de la bande dans une cassette normalisée.

8. Cassette à bande magnétique suivant la revendication 7, caractérisée en ce que le logement récepteur (25) possède les dimensions extérieures d'une cassette à bande d'un demi-pouce et que dans son état fermé, la cassette à bande magnétique (10) qui est logée dans le logement récepteur, possède les dimensions extérieures d'une cassette à bande d'un quart de pouce.

# FIG. 1

# FIG. 2

## FIG.3